# EUROPÄISCHE PATENTANMELDUNG

(11) **EP 4 037 063 A1**
(43) Veröffentlichungstag der Anmeldung: **03.08.2022**
(21) Anmeldenummer: 22152406.9
(22) Anmeldetag: 20.01.2022
(51) Int. Cl.: H01M 10/60, H01M 10/6566, H01M 50/209

(54) **BATTERIEMODULGEHÄUSE UND ANORDNUNG VON BATTERIEMODULEN**

(30) Priorität: 02.02.2021 DE 102021102360
(71) Anmelder: Lisa Dräxlmaier GmbH, 84137 Vilsbiburg (DE)
(72) Erfinder: HAHN, Alexander, 91341 Röttenbach (DE); STECKEL, Michael, 84137 Vilsbiburg (DE); FALTERMEIER, Peter, 84028 Landshut (DE); SEIDL, Stefan, 84028 Landshut (DE)

(57) **Zusammenfassung**

Die Erfindung betrifft ein Batteriemodulgehäuse (100) mit einem Gehäuseinnenraum, welcher eingerichtet ist, wenigstens eine Batteriezelle (103) aufzunehmen, eine Gehäuseinnenwand (102, 152, 162), welche den Gehäuseinnenraum von einer Gehäuseaußenwand (101, 151, 161) des Batteriemodulgehäuses (100) räumlich abtrennt, wobei zwischen der Gehäuseinnenwand (102, 152, 162) und der Gehäuseaußenwand (101, 151, 161) ein Kühlfluidverteiler (105, 155a, 155b, 165a, 165b) gebildet ist und die Gehäuseinnenwand (102, 152, 162) wenigstens eine Öffnung (104) umfasst, die eingerichtet ist, ein Kühlfluid von dem Kühlfluidverteiler (105, 155a, 155b, 165a, 165b) in den Gehäuseinnenraum einströmen zu lassen.

## Beschreibung

### Technisches Gebiet

Die vorliegende Erfindung betrifft ein Batteriemodulgehäuse. Des Weiteren betrifft die Erfindung eine Anordnung von Batteriemodulen.

### Stand der Technik

Elektrisch betriebene Fahrzeuge werden mit Elektromotoren angetrieben. Die Energie, welche für den Antrieb des Elektromotors benötigt wird, wird aus einer Batterie entnommen. In der Batterie sind Batteriezellen eingesetzt. Bei der Entnahme der Energie aus der Batterie entsteht aufgrund der elektrischen Widerstände und damit verbundenen Leistungsverlusten, beispielsweise einem Innenwiderstand der Batteriezelle oder Kontaktwiderstände, eine Verlustleistung, welche in Wärme umgewandelt wird. Diese Verlustleistung führt zu einer permanenten und vollumfänglichen Erwärmung aller Batteriezellen in der Batterie. Ohne eine Wärmeabfuhr überhitzen die Batteriezellen und dies kann zu einer Zerstörung einer Batteriezelle oder sogar der gesamten Batterie führen. Aus diesem Grund müssen die Batteriezellen gekühlt werden. Auch ist es wichtig, dass die Temperaturverteilung innerhalb der Batterie sehr gleichmäßig ist und es nicht zu sogenannten Hotspots, also lokalen erhöhten Temperaturen an einigen Batteriezellen, kommt und damit den Alterungsprozess dieser Batteriezellen beschleunigt.

Die DE102015108426 B4 beschreibt eine Vorrichtung zur Kühlung einer aus mindestens einer Einzelzelle bestehenden Batterie, umfassend eine aktiv gekühlte erste Kühlplatte, wobei die erste Kühlplatte mit der mindestens einen Einzelzelle in einem thermischen Kontakt steht, eine als Wärmeleitplatte ausgebildete zweite Kühlplatte, die mit der mindestens einen Einzelzelle in einem thermischen Kontakt steht, Des Weiteren umfasst die Vorrichtung mindestens ein Wärmerohr, wobei die erste Kühlplatte mit der zweiten Kühlpatte über das mindestens eine Wärmerohr thermisch verbunden ist, damit die von der mindestens einen Einzelzelle erzeugte Wärme zu der ersten Kühlplatte und der zweiten Kühlplatte abführbar ist, wobei die erste Kühlplatte über der zweiten Kühlplatte angeordnet ist und das mindestens eine Wärmerohr im Betriebszustand im Wesentlichen senkrecht zu der ersten Kühlplatte angeordnet ist.

### Beschreibung der Erfindung

Eine Aufgabe der Erfindung ist es daher, unter Einsatz konstruktiv möglichst einfacher Mittel eine einfache Kühlung von Batteriezellen bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein Aspekt der Erfindung betrifft ein Batteriemodulgehäuse umfassend einen Gehäuseinnenraum, welcher eingerichtet ist, wenigstens eine Batteriezelle aufzunehmen, eine Gehäuseinnenwand, welche den Gehäuseinnenraum von einer Gehäuseaußenwand des Batteriemodulgehäuses räumlich abtrennt, wobei zwischen der Gehäuseinnenwand und der Gehäuseaußenwand ein Kühlfluidverteiler gebildet ist und die Gehäuseinnenwand wenigstens eine Öffnung umfasst, die eingerichtet ist, ein Kühlfluid von dem Kühlfluidverteiler in den Gehäuseinnenraum einströmen zu lassen. Das Batteriemodulgehäuse kann in dem Gehäuseinnenraum eine Batteriezelle, beispielsweise eine Rundzelle, aufnehmen. Das Batteriemodulgehäuse umfasst eine Gehäuseinnenwand und eine Gehäuseaußenwand. Die Gehäuseinnenwand liegt der Gehäuseaußenwand gegenüber. Die Gehäuseinnenwand trennt den Gehäuseinnenraum von der Gehäuseaußenwand räumlich ab.

Die Batteriezelle kann von einem Batteriezellhalter in dem Batteriemodulgehäuse gehalten werden. In dem Gehäuseinnenraum des Batteriemodulgehäuses kann eine Vielzahl von Batteriezellen aufgenommen werden. Die Batteriezellen können in dem Gehäuseinnenraum in einer Mehrzahl von Reihen angeordnet werden. Die Reihen können versetzt angeordnet werden, sodass das Kühlfluid zwischen den Batteriezellen fließen kann. Es ist anzustreben, das Volumen des Gehäuseinnenraums mit den Batteriezellen so gering wie möglich zu halten, sodass wenig Kühlfluid benötigt wird. Beispielsweise können die Batteriezellen in einem sehr geringen Abstand zueinander in dem Gehäuseinnenraum angeordnet werden. Zwischen der Gehäuseinnenwand und der Gehäuseaußenwand fließt das Kühlfluid. Die Batteriezellen können elektrisch parallel geschalten werden. Das Batteriemodulgehäuse kann einstückig über Spritzgussverfahren hergestellt werden, sodass das Batteriemodulgehäuse flüssigkeitsdicht ist. Dadurch kann eine gute Dichtigkeit gegenüber dem Kühlfluid hergestellt werden. Zusätzlich werden keine zusätzlichen Bauteile, wie beispielsweise Schrauben, benötigt.

In einer Ausführungsform umfasst die Gehäuseinnenwand eine Mehrzahl von Öffnungen, die verteilt in der Gehäuseinnenwand angeordnet sind.

Die Anzahl der Öffnungen pro Gehäuseinnenwand kann variieren. Über die Öffnungen gelangt das Kühlfluid von dem Kühlfluidverteiler in den Gehäuseinnenraum, wodurch die Batteriezellen gekühlt werden können.

In einer weiteren Ausführungsform ist ein Querschnitt des Kühlfluidverteilers mindestens genauso groß ist, wie eine Summe aller Querschnitte der Mehrzahl von Öffnungen.

In einer weiteren Ausführungsform ist der Querschnitt des Kühlfluidverteilers um • 2 größer ist, als die Summe aller Querschnitte der Mehrzahl von Öffnungen. Damit kann ein gleichverteiltes Einfließen des Kühlfluids in den Gehäuseinnenraum erfolgen.

In einer weiteren Ausführungsform sind die Öffnungen derart in der Gehäuseinnenwand angeordnet, dass bei einem Einströmen des Kühlfluids in den Gehäuseinnenraum das Kühlfluid ein Batteriemodulelement umströmt. Das Batteriemodulelement kann beispielsweis eine Batteriezelle oder ein Batteriezellhalter sein. Die Position der Öffnungen an der Gehäuseinnenwand sollte derart gewählt sein, sodass das Batteriemodulelement einen Strömungswiderstand des Kühlfluids erzeugt. Durch das Batteriemodulelement wird die Strömung des Kühlfluids gehemmt und umströmt das Batteriemodulelement. Dadurch kann eine gleichmäßige Umströmung des Kühlfluids innerhalb des Gehäuseinnenraums und somit eine gleichmäßige Kühlung der Batteriezellen erfolgen.

In einer weiteren Ausführungsform ist in dem Gehäuseinnenraum eine Mehrzahl der Batteriezellen angeordnet und jeweils eine Öffnung ist zumindest einer Batteriezelle zugeordnet. Die Öffnungen können derart an der Gehäuseinnenwand angeordnet sein, sodass eine Kühlfluidmenge des Kühlfluids gleichmäßig bis zu jeder Batteriezelle geführt wird. Das Kühlfluid umströmt somit jede einzelne in dem Gehäuseinnenraum befindliche Batteriezelle. Die Anzahl der Öffnungen kann je nach Anzahl der Batteriezellen variieren.

In einer weiteren Ausführungsform ist die jeweils eine Öffnung unmittelbar vor einer der Öffnung am nächsten liegenden Batteriezelle angeordnet. Der Abstand zwischen der Batteriezelle und der Öffnung sollte möglichst gering gewählt werden. Das Kühlfluid kann dadurch schnell zur Batteriezelle gelangen. Die Batteriezelle wird von dem Kühlfluid direkt umströmt und nimmt die Wärme der Batteriezelle auf, sodass die Batteriezelle gekühlt wird.

In einer weiteren Ausführungsform umfasst der Kühlfluidverteiler einen Kühlfluidzulauf, welcher eingerichtet ist, das Kühlfluid in den Kühlfluidverteiler einströmen zu lassen. Der Kühlfluidzulauf kann ein Kühlfluidreservoir sein, welcher über Verbindungsschläuche an dem Kühlfluidverteiler angeschlossen werden kann. Der Kühlfluidzulauf kann eine Pumpe umfassen, welche das Kühlfluid in den Kühlfluidverteiler pumpt.

In einer weiteren Ausführungsform umfasst das Batteriemodulgehäuse eine weitere Gehäuseinnenwand und zwischen der weiteren Gehäuseinnenwand und einer weiteren Gehäuseaußenwand ist ein weiterer Kühlfluidverteiler gebildet. Die weitere Gehäuseinnenwand umfasst wenigstens eine weitere Öffnung umfasst, welche eingerichtet ist, das Kühlfluid aus dem Gehäuseinnenbereich ausströmen zu lassen. Beispielsweise kann der weitere Kühlfluidverteiler gegenüber dem Kühlfluidverteiler angeordnet sein. Das Kühlfluid kann über die wenigstens eine Öffnung von dem Kühlfluidverteiler in den Gehäuseinnenraum eingeströmt werden. Das Kühlfluid kann die Batteriezellen umströmen. Wenn das Kühlfluid die Batteriezellen umströmt, erwärmt sich das Kühlfluid, da es die überschüssige Wärme der Batteriezellen aufnimmt. Das erwärmte Kühlfluid kann über die weiteren Öffnungen aus dem Gehäuseinnenraum in den weiteren Kühlfluidverteiler ausströmen.

In einer weiteren Ausführungsform umfasst der weitere Kühlfluidverteiler einen Kühlfluidablauf, welcher eingerichtet ist, das Kühlfluid aus dem weiteren Kühlfluidverteiler ausströmen zu lassen. Aus dem Kühlfluidablauf kann das erwärmte Kühlfluid aus dem weiteren Kühlfluidverteiler ausströmen. Für das Kühlfluid wird eine elektrisch nicht leitende Kühlflüssigkeit, beispielsweise Trafo-Öl, verwendet.

Ein weiterer Aspekt der Erfindung betrifft eine Anordnung von Batteriemodulen mit einem ersten Batteriemodulgehäuse umfassend einen Gehäuseinnenraum, in welchem wenigstens eine Batteriezelle aufgenommen ist, eine Gehäuseinnenwand, welche den Gehäuseinnenraum von einer Gehäuseaußenwand des Batteriemodulgehäuses räumlich abtrennt, wobei zwischen der Gehäuseinnenwand und der Gehäuseaußenwand ein Kühlfluidverteiler gebildet ist und die Gehäuseinnenwand wenigstens eine Öffnung umfasst, die eingerichtet ist, ein Kühlfluid von dem Kühlfluidverteiler in den Gehäuseinnenraum einströmen zu lassen. Des Weiteren umfasst die Anordnung ein weiteres Batteriemodulgehäuse mit einen Gehäuseinnenraum, in welchem wenigstens eine Batteriezelle aufgenommen ist, eine Gehäuseinnenwand, welche den Gehäuseinnenraum von einer Gehäuseaußenwand des Batteriemodulgehäuses räumlich abtrennt, wobei zwischen der Gehäuseinnenwand und der Gehäuseaußenwand ein Kühlfluidverteiler gebildet ist und die Gehäuseinnenwand wenigstens eine Öffnung umfasst, die eingerichtet ist, ein Kühlfluid von dem Kühlfluidverteiler in den Gehäuseinnenraum einströmen zu lassen, wobei der Kühlfluidverteiler des ersten Batteriemodulgehäuses mit dem Kühlfluidverteiler des zweiten Batteriemodulgehäuses verbunden ist und der Querschnitt des Kühlfluidverteilers des ersten Batteriemodulgehäuses größer ist als der Querschnitt des Kühlfluidverteilers des zweiten Batteriemodulgehäuses.

Damit eine gleichmäßige Strömung des Kühlfluids innerhalb der Batteriemodule stattfinden kann, muss der Querschnitt es Kühlfluidverteilers des ersten Batteriemodulgehäuses größer sein als der Querschnitt des Kühlfluidverteilers des zweiten Batteriemodulgehäuses. Die gleichmäßige Zuführung des Kühlfluids zu jeder Batteriezelle führt zu einer gleichmäßigen Kühlung der Batteriezelle des ersten Batteriemodulgehäuses und der Batteriezelle des zweiten Batteriemodulgehäuses. Es wird damit erreicht, dass lediglich die Batteriezellen eine Temperaturdifferenz aufweisen, nicht aber die Batteriemodule zueinander.

In einer weiteren Ausführungsform kann die Anordnung eine Mehrzahl von Batteriemodulgehäusen umfassen.

Beispielsweise können die Batteriezellen der Batteriemodule von einem Batteriezellhalter in dem Batteriemodulgehäuse gehalten werden. Der Batteriezellhalter kann aus einem geschäumten Material sein. Der Batteriezellhalter kann beispielsweise aus einem Schaumstoff hergestellt sein. Der Batteriezellhalter enthält für jede Batteriezelle eine Aussparung, in welche die Batteriezelle eingesetzt wird und in dem Batteriezellhalter fixiert ist. Beispielsweise können Rundzellen als Batteriezellen verwendet werden. Die Stirnseiten der Rundzellen können von dem Batteriezellhalter frei liegen. Die Rundzellen sind derart in dem Batteriemodulgehäuse eingesetzt, sodass die Stirnseiten von dem Kühlfluid direkt umströmt werden können. Durch den Batteriezellhalter wird das Kühlfluid verdrängt, sodass lediglich die Stirnseiten von dem Kühlfluid umströmt werden. Es können ebenfalls andere Arten von Batteriezellen in den Batteriemodulgehäusen angeordnet sein.

Die Anordnung der Batteriemodule können zu einer Fahrzeugbatterie eines elektrisch betriebenen Fahrzeugs verschalten werden. Unter einem elektrisch betriebenen Fahrzeug werden Hybridfahrzeuge oder rein elektrische Fahrzeuge verstanden.

In einer Ausführungsform umfasst der Kühlfluidverteiler des ersten Batteriemodulgehäuses einen Kühlfluidzulauf, welcher eingerichtet ist, das Kühlfluid in den Kühlfluidverteiler des ersten Batteriemodulgehäuses einströmen zu lassen. Da der Kühlfluidverteiler des ersten Batteriemodulgehäuses mit dem Kühlfluidverteiler des zweiten Batteriemodulgehäuses verbunden ist, strömt das durch den Kühlfluidzulauf eingeströmte Kühlfluid nicht nur durch den Kühlfluidverteiler des ersten Batteriemodulgehäuses, sondern auch durch den Kühlfluidverteiler des zweiten Batteriemodulgehäuses. Damit kann eine gleichzeitige Kühlung der Batteriezellen des ersten Batteriemodulgehäuses und des zweiten Batteriemodulgehäuses erreicht werden. Das zweite Batteriemodulgehäuse kann einen Kühlfluidablauf umfassen, welcher eingerichtet ist, das Kühlfluid aus dem Kühlfluidverteiler des zweiten Batteriemodulgehäuses ausströmen zu lassen.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: eine schematische Schnittdarstellung eines Batteriemoduls gemäß einem Ausführungsbeispiel und
- Figur 2: eine schematische Darstellung einer Mehrzahl von Batteriemodulen gemäß einem weiteren Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

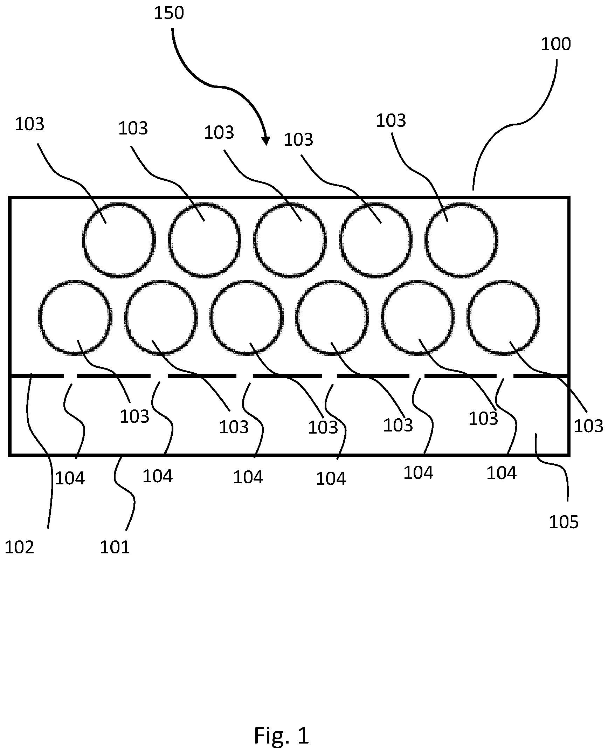

Die Fig. 1 zeigt ein Batteriemodul 150 mit einem Batteriemodulgehäuse 100. Das Batteriemodulgehäuse 100 umfasst eine Gehäuseaußenwand 101 und eine Gehäuseinnenwand 102. Das Batteriemodulgehäuse 100 kann einstückig mithilfe von Spritzgussverfahren hergestellt werden. In dem Batteriemodul 150 sind eine Mehrzahl von Batteriezellen 103 eingesetzt. Die Batteriezellen 103 sind in Reihen angeordnet. Die Reihen sind versetzt zueinander angeordnet. Die Gehäuseinnenwand 102 umfasst eine Mehrzahl von Öffnungen 104. Jede der Öffnungen 104 ist einer Batteriezelle 103 zugeordnet. Die Öffnungen 104 sind in einem geringen Abstand zu den Batteriezellen 103 angeordnet. Zwischen der Gehäuseinnenwand 102 und der Gehäuseaußenwand 101 ist ein Kühlfluidverteiler 105 ausgebildet. Über den Kühlfluidverteiler 105 wird ein Kühlfluid in das Batteriemodulgehäuse 100 eingeströmt. Über die Öffnungen 104 gelangt das Kühlfluid in einen Gehäuseinnenraum, in welchem die Batteriezellen 103 angeordnet sind. Durch das Umströmen der Batteriezellen durch das Kühlfluid werden die Batteriezellen direkt gekühlt und das Kühlfluid nimmt die Wärme der Batteriezellen auf und wird von den Batteriezellen weggeführt, sodass eine entsprechend notwendige Kühlleistung erzielt werden kann.

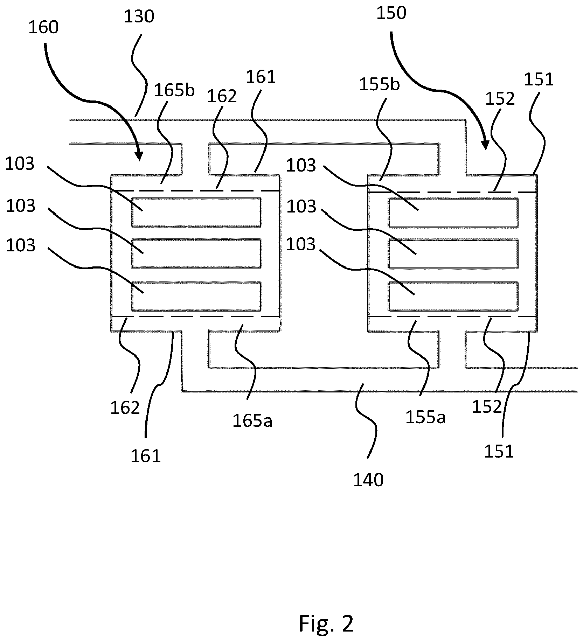

Die Fig. 2 zeigt eine Mehrzahl von Batteriemodulen 150, 160 gemäß einem weiteren Ausführungsbeispiel. Das Batteriemodul 150 und das weitere Batteriemodul 160 sind über einen gemeinsamen Kühlfluidzulauf 140 und einen gemeinsamen Kühlfluidablauf 130 fluidisch verbunden. In den Batteriemodulen 150, 160 sind Batteriezellen 103 angeordnet. Jedes der Batteriemodule 150, 160 umfasst eine Gehäuseaußenwand 151, 161 und zwei Gehäuseinnenwände 152, 162. Die Gehäuseinnenwände 152, 162 der jeweiligen Batteriemodule 150, 160 bilden gemeinsam mit der Gehäuseaußenwand 152, 161 jeweils einen Kühlfluidverteiler 155a, 155b, 165a, 165b. Über den Kühlfluidzulauf 140 gelangt das Kühlfluid in den Kühlfluidverteiler 155b, 165b. Die Gehäuseinnenwände 152, 162 umfassen eine Mehrzahl von Öffnungen, welche ein Einströmen des Kühlfluids in den Bereich der Batteriezellen 103 beziehungsweise ein Ausströmen des Kühlfluids aus dem Bereich der Batteriezellen 103 ermöglichen. In dem weiteren Ausführungsbeispiel strömt das Kühlfluid in einer Fluidströmungsrichtung innerhalb des Batteriemoduls 150, 160 von unten nach oben.

In einem anderen Ausführungsbeispiel kann das Kühlfluid in einer anderen Fluidströmungsrichtung strömen. Um bei einem gleichbleibenden Druck eine gleichmäßige Verteilung des Kühlfluids auf die Batteriemodule 150, 160 zu erhalten, muss der Querschnitt des Kühlfluidzulaufs in einem Bereich des Batteriemoduls 160 größer sein als in einem Bereich des Batteriemoduls 150.

### BEZUGSZEICHENLISTE

- 100: Batteriemodulgehäuse
- 101, 151, 161: Gehäuseaußenwand
- 102, 152, 162: Gehäuseinnenwand
- 103: Batteriezelle
- 104: Öffnungen
- 105: Kühlfluidverteiler
- 130: Kühlfluidablauf
- 140: Kühlfluidzulauf
- 150, 160: Batteriemodul
- 155a, 155b, 165a, 165b: Kühlfluidverteiler

## Patentansprüche

1. Batteriemodulgehäuse (100) umfassend
einen Gehäuseinnenraum, welcher eingerichtet ist, wenigstens eine Batteriezelle (103) aufzunehmen,
eine Gehäuseinnenwand (102, 152, 162), welche den Gehäuseinnenraum von einer Gehäuseaußenwand (101, 151, 161) des Batteriemodulgehäuses (100) räumlich abtrennt,
wobei zwischen der Gehäuseinnenwand (102, 152, 162) und der Gehäuseaußenwand (101, 151, 161) ein Kühlfluidverteiler (105, 155a, 155b, 165a, 165b) gebildet ist und die Gehäuseinnenwand (102, 152, 162) wenigstens eine Öffnung (104) umfasst, die eingerichtet ist, ein Kühlfluid von dem Kühlfluidverteiler (105, 155a, 155b, 165a, 165b) in den Gehäuseinnenraum einströmen zu lassen.

2. Batteriemodulgehäuse (100) nach Anspruch 1, **dadurch gekennzeichnet, dass** die Gehäuseinnenwand (102, 152, 162) eine Mehrzahl von Öffnungen (104) umfasst, die verteilt in der Gehäuseinnenwand (102, 152, 162) angeordnet sind.

3. Batteriemodulgehäuse (100) nach Anspruch 2, **dadurch gekennzeichnet, dass** ein Querschnitt des Kühlfluidverteilers (105, 155a, 155b, 165a, 165b) mindestens genauso groß ist, wie eine Summe aller Querschnitte der Mehrzahl von Öffnungen (104).

4. Batteriemodulgehäuse (100) nach Anspruch 3, wobei der Querschnitt des Kühlfluidverteilers (105, 155a, 155b, 165a, 165b) um •2 größer ist, als die Summe aller Querschnitte der Mehrzahl von Öffnungen (104).

5. Batteriemodulgehäuse (100) nach einem der vorhergehenden Ansprüche, wobei die Öffnungen (104) derart in der Gehäuseinnenwand (102, 152, 162) angeordnet sind, dass bei einem Einströmen des Kühlfluids in den Gehäuseinnenraum das Kühlfluid ein Batteriemodulelement umströmt.

6. Batteriemodulgehäuse (100) nach einem der vorhergehenden Ansprüche, wobei in dem Gehäuseinnenraum eine Mehrzahl der Batteriezellen (103) angeordnet ist und wobei jeweils eine Öffnung (104) zumindest einer Batteriezelle (103) zugeordnet ist.

7. Batteriemodulgehäuse (100) nach Anspruch 6, wobei die jeweils eine Öffnung (104) unmittelbar vor einer der Öffnung (104) am nächsten liegenden Batteriezelle (103) angeordnet ist.

8. Batteriemodulgehäuse (100) nach einem der vorhergehenden Ansprüche, wobei der Kühlfluidverteiler (105, 155a, 155b, 165a, 165b) einen Kühlfluidzulauf (140) umfasst, welcher eingerichtet ist, das Kühlfluid in den Kühlfluidverteiler (105, 155a, 155b, 165a, 165b) einströmen zu lassen.

9. Batteriemodulgehäuse (100) nach einem der vorhergehenden Ansprüche, wobei das Batteriemodulgehäuse (100) eine weitere Gehäuseinnenwand (102, 152, 162) umfasst, und zwischen der weiteren Gehäuseinnenwand (102, 152, 162) und einer weiteren Gehäuseaußenwand (101, 151, 161) ein weiterer Kühlfluidverteiler (105, 155a, 155b, 165a, 165b) gebildet ist und die weitere Gehäuseinnenwand (102, 152, 162) wenigstens eine weitere Öffnung (104) umfasst, welche eingerichtet ist, das Kühlfluid aus dem Gehäuseinnenbereich ausströmen zu lassen.

10. Batteriemodulgehäuse (100) nach Anspruch 9, **dadurch gekennzeichnet, dass** der weitere Kühlfluidverteiler (105, 155a, 155b, 165a, 165b) einen Kühlfluidablauf (130) umfasst, welcher eingerichtet ist, das Kühlfluid aus dem weiteren Kühlfluidverteiler (105, 155a, 155b, 165a, 165b) ausströmen zu lassen.

11. Anordnung von Batteriemodulen (150, 160) mit
einem ersten Batteriemodulgehäuse (100) umfassend einen Gehäuseinnenraum, in welchem wenigstens eine Batteriezelle (103) aufgenommen ist, eine Gehäuseinnenwand (102, 152, 162), welche den Gehäuseinnenraum von einer Gehäuseaußenwand (101, 151, 161) des Batteriemodulgehäuses (100) räumlich abtrennt, wobei zwischen der Gehäuseinnenwand (102, 152, 162) und der Gehäuseaußenwand (101, 151, 161) ein Kühlfluidverteiler (105, 155a, 155b, 165a, 165b) gebildet ist und die Gehäuseinnenwand (102, 152, 162) wenigstens eine Öffnung (104) umfasst, die eingerichtet ist, ein Kühlfluid von dem Kühlfluidverteiler (105, 155a, 155b, 165a, 165b) in den Gehäuseinnenraum einströmen zu lassen.
einem ersten Batteriemodulgehäuse (100) umfassend einen Gehäuseinnenraum, in welchem wenigstens eine Batteriezelle (103) aufgenommen ist, eine Gehäuseinnenwand (102, 152, 162), welche den Gehäuseinnenraum von einer Gehäuseaußenwand (101, 151, 161) des Batteriemodulgehäuses (100) räumlich abtrennt, wobei zwischen der Gehäuseinnenwand (102, 152, 162) und der Gehäuseaußenwand (101, 151, 161) ein Kühlfluidverteiler (105, 155a, 155b, 165a, 165b) gebildet ist und die Gehäuseinnenwand (102, 152, 162) wenigstens eine Öffnung (104) umfasst, die eingerichtet ist, ein Kühlfluid von dem Kühlfluidverteiler (105, 155a, 155b, 165a, 165b) in den Gehäuseinnenraum einströmen zu lassen
wobei der Kühlfluidverteiler (105, 155a, 155b, 165a, 165b) des ersten Batteriemodulgehäuses (100, 150, 160) mit dem Kühlfluidverteiler (105, 155a, 155b, 165a, 165b) des zweiten Batteriemodulgehäuses (150, 160) verbunden ist und der Querschnitt des Kühlfluidverteilers (105, 155a, 155b, 165a, 165b) des ersten Batteriemodulgehäuses (100) größer ist als der Querschnitt des Kühlfluidverteilers (105, 155a, 155b, 165a, 165b) des zweiten Batteriemodulgehäuses (100).

12. Anordnung von Batteriemodulen (150, 160) nach Anspruch 11, wobei der Kühlfluidverteiler (105, 155a, 155b, 165a, 165b) des ersten Batteriemodulgehäuses (100) einen Kühlfluidzulauf (140) umfasst, welcher eingerichtet ist, das Kühlfluid in den Kühlfluidverteiler (105, 155a, 155b, 165a, 165b) des ersten Batteriemodulgehäuses (100) einströmen zu lassen.
